# FASCICULE DE BREVET EUROPEEN

(11) **EP 2 579 186 B1**
(45) Date de publication et mention de la délivrance du brevet: **09.09.2015**
(21) Numéro de dépôt: 11183843.9
(22) Date de dépôt: 04.10.2011
(51) Int. Cl.: G04G 21/00, G04G 99/00

(54) **Procédé d'authentification d'une montre électronique, et montre électronique pour sa mise en oeuvre**
Verfahren zur Authentifizierung einer elektronischen Armbanduhr, und elektronische Armbanduhr zu dessen Umsetzung
Method for authenticating an electronic watch and electronic watch for implementing the same

(43) Date de publication de la demande: 10.04.2013
(73) Titulaire: ETA SA Manufacture Horlogère Suisse, 2540 Grenchen (CH)
(72) Inventeur: Peters, Jean-Bernard, 2542 Pieterlen (CH); Klopfenstein, François, 2800 Delémont (CH); Fleury, Emmanuel, 2740 Moutier (CH)
(74) Mandataire: Giraud, Eric

(56) Documents cités:
- EP-A1- 1 424 658
- EP-A2- 2 015 149
- CN-A- 101 305 385
- FR-A1- 2 488 704
- US-A1- 2006 144 946

## Description

### DOMAINE TECHNIQUE

La présente invention concerne un procédé d'authentification d'une montre électronique, qui peut être à affichage de l'heure au moyen d'aiguilles entraînées par des moyens motorisés. La montre comprend notamment au moins un circuit de traitement et de commande muni d'une base de temps et des moyens de mémorisation de données personnelles et/ou de données d'identification d'une marque et/ou d'un numéro de série et/ou de paramètres de fonctionnement de la montre. Le circuit de traitement et de commande peut être par exemple une unité à microcontrôleur.

La présente invention concerne également une montre électronique pour la mise en oeuvre du procédé d'authentification de la montre.

### ARRIERE-PLAN TECHNOLOGIQUE

De manière à pouvoir authentifier une montre mécanique ou électro-mécanique, il peut être prévu de munir la montre d'une marque d'identification notamment pendant son procédé de fabrication. Cette marque d'identification peut se présenter sous la forme d'un codage appliqué par exemple sur une partie extérieure de la boîte de montre non directement visible lorsque la montre est portée au poignet pour ne pas nuire à l'esthétisme de ladite montre. Ce codage peut être par exemple une image codée, telle qu'un code à barres à deux dimensions comme défini dans la demande de brevet EP 1 804 195 A1. Cette image codée, qui est obtenue par des algorithmes de calcul spécifiques, se base sur l'identifiant de la montre, qui est généralement vendue avec une carte portant ledit identifiant de la montre. Ce code peut être décrypté par une opération de décryptage au moyen de clés de décryptage fournies par la maison mère. Ainsi pour pouvoir authentifier ladite montre, cela nécessite l'emploi d'un appareil informatique spécifique, ce qui est long et compliqué, et constitue de ce fait un inconvénient.

La montre mécanique ou électro-mécanique peut aussi comprendre, dans la boîte de montre ou camouflée sur une partie extérieure de la boîte de montre, une puce à circuit RFID personnalisé. Le code d'identification est ainsi mémorisé dans ladite puce à circuit RFID de manière à permettre à un dispositif de lecture à proximité de lire ledit code d'identification par une communication sans fil. Cette marque permet d'améliorer la protection de la montre contre des contrefaçons en authentifiant l'origine de ladite montre. Cependant comme précédemment, il est nécessaire de disposer de moyens spécifiques extérieurs pour pouvoir lire et reconnaître les données d'authentification de la montre, ce qui constitue un inconvénient.

On peut citer également la demande de brevet FR 2 630 228 A1, qui décrit une montre à calendrier perpétuel. Cette montre est munie d'aiguilles pour l'affichage de l'heure. La montre comprend également un circuit électronique de commande et une tige de mise à l'heure, qui peut être soumise à plusieurs manipulations relatives chacune à une fonction déterminée. Le circuit électronique dans la boîte de montre, est capable de reconnaître un code, qui correspond à une suite de manipulations déterminées effectuées avec la tige de mise à l'heure. Ceci permet d'effectuer le passage dans un mode de programmation du calendrier perpétuel, ainsi que d'effectuer une programmation spécifique. Le circuit électronique peut reconnaître si le code du passage dans un mode de programmation a été correctement introduit. Cependant, un tel circuit électronique ne permet pas de commander la montre de manière à fournir une indication d'authentification de ladite montre.

Dans la demande de brevet FR 2 488 704 A1, la montre du type analogique ou numérique comprend en plus des composants de la base de temps, un moyen de sélection d'un code à transmettre en indiquant la sélection sur un dispositif d'affichage. La montre comprend encore un moyen de transfert du code par l'intermédiaire d'une partie électro-optique, qui affiche le code sous forme binaire. Le code transmis par la partie électro-optique peut être capté par un dispositif de traitement optoélectronique. Comme précédemment indiqué, un dispositif de traitement externe doit être utilisé pour lire le code ou authentifier ladite montre, ce qui constitue un inconvénient.

Dans la demande de brevet CN 101 305 385 A, il est décrit une étiquette numérique pour un produit, ainsi qu'un procédé d'authentification dudit produit, qui porte l'étiquette. Ce produit peut être une montre-bracelet, qui comprend un dispositif d'affichage électronique pour afficher une information de l'étiquette. L'étiquette numérique comprend un processeur, une mémoire et un afficheur, qui sont indépendants des composants électroniques de la montre. L'étiquette peut enregistrer et afficher une information de la montre, sur laquelle elle est placée, ainsi que mémoriser des données d'authentification de la montre pour pouvoir l'authentifier. Comme l'étiquette comprend des éléments électroniques indépendants des composants de la montre, cela nécessite l'utilisation d'un grand nombre de composants électroniques pour permettre l'authentification de la montre, ce qui est un inconvénient.

Dans la demande de brevet US 2006/0144946 A1, il est décrit un système et un procédé d'utilisation d'un code à barres à deux dimensions à haute sécurité dans un téléphone portable. Un organe d'activation du téléphone est activé pour passer dans un mode d'authentification, et afficher le code à barres à deux dimensions à lire par un dispositif de lecture spécifique. Il est nécessaire d'utiliser un dispositif externe pour signaler l'authentification du téléphone, ce qui constitue un inconvénient.

Dans la demande de brevet EP 2 015 149 A2, il est décrit une montre avec une mémoire contenant des informations d'authentification de la montre, et des moyens pour communiquer avec un dispositif de signalisation externe à la montre de manière à permettre son authentification. Il est nécessaire d'utiliser un dispositif de signalisation externe à la montre pour pouvoir l'authentifier, ce qui constitue un inconvénient.

### RESUME DE L'INVENTION

L'invention a donc pour but principal de pallier aux inconvénients susmentionnés en proposant un procédé d'authentification d'une montre électronique qui peut être mis en fonction rapidement et qui permet de contrôler l'authenticité de la montre sans l'utilisation d'instruments externes.

A cet effet, la présente invention concerne un procédé d'authentification d'une montre électronique, qui comprend les caractéristiques des revendications indépendantes 1 et 2.

Des étapes particulières du procédé d'authentification sont définies dans les revendications dépendantes 3 à 8.

Un avantage du procédé d'authentification d'une montre électronique selon l'invention réside dans le fait qu'un dispositif de signalisation propre à la montre peut être mis en fonction une fois qu'un organe d'activation est activé pour le passage dans un mode d'authentification. Ce dispositif de signalisation mis en fonction permet de fournir une information d'authentification directement à l'utilisateur de la montre pour certifier son authenticité. Ce dispositif de signalisation peut signaler visuellement l'information d'authentification.

Avantageusement, une ou plusieurs aiguilles d'indication de l'heure de la montre peuvent faire partie du dispositif de signalisation. Pour ce faire, le circuit de traitement et de commande est configuré et programmé pour commander des moyens motorisés. Ces moyens motorisés entraînent une ou plusieurs aiguilles une fois que l'organe d'activation est mis en fonction et active le passage dans le mode d'authentification. La ou les aiguilles peuvent ainsi indiquer successivement chaque chiffre ou nombre sur le cadran de montre d'au moins une partie d'un code d'identification de la marque de montre et/ou d'un numéro de série pour authentifier la montre. La ou les aiguilles peuvent aussi décrire des mouvements rotatifs spécifiques à l'authentification de la montre. La partie du code d'identification visualisé par la ou les aiguilles sur le cadran peut être comparée au code d'identification inscrit sur une carte accompagnant ladite montre lors de sa vente.

A cet effet, la présente invention concerne également une montre électronique pour la mise en oeuvre du procédé d'authentification, qui comprend les caractéristiques des revendications indépendantes 9 et 10.

Des formes particulières de réalisation de la montre électronique sont définies dans les revendications dépendantes 11 à 19.

Un avantage de la montre électronique pour la mise en oeuvre du procédé d'authentification réside dans le fait qu'elle comprend un organe d'activation prévu pour être activé d'une certaine manière pour commander à un circuit de traitement et de commande le passage dans un mode d'authentification de la montre. Un dispositif de signalisation de la montre permet ainsi d'être commandé par le circuit pour fournir une information d'authentification de la montre une fois que l'organe d'activation est activé. Ce dispositif de signalisation peut comprendre une ou plusieurs aiguilles déplacées sur le cadran de montre, ou un ou deux disques de quantième.

### BREVE DESCRIPTION DES FIGURES

Les buts, avantages et caractéristiques du procédé d'authentification d'une montre électronique, et de la montre électronique pour sa mise en oeuvre apparaîtront mieux dans la description suivante de manière non limitative en regard des dessins sur lesquels :
- la figure 1 représente une vue schématique de différents blocs électroniques d'une montre électronique à affichage de l'heure par des aiguilles pour la mise en oeuvre du procédé d'authentification selon l'invention, et
- la figure 2 représente de manière simplifiée différentes étapes d'une forme d'exécution du procédé d'authentification d'une montre électronique à affichage de l'heure par des aiguilles selon l'invention.

### DESCRIPTION DETAILLEE DE L'INVENTION

Dans la description suivante, tous les composants d'une montre électronique pour la mise en oeuvre du procédé d'authentification de ladite montre, qui sont bien connus de l'homme du métier dans ce domaine technique ne sont relatés que de manière simplifiée. La description suivante se base principalement sur une montre électronique à affichage de l'heure au moyen d'aiguilles, même si le procédé d'authentification peut s'appliquer à d'autres types de montre électronique.

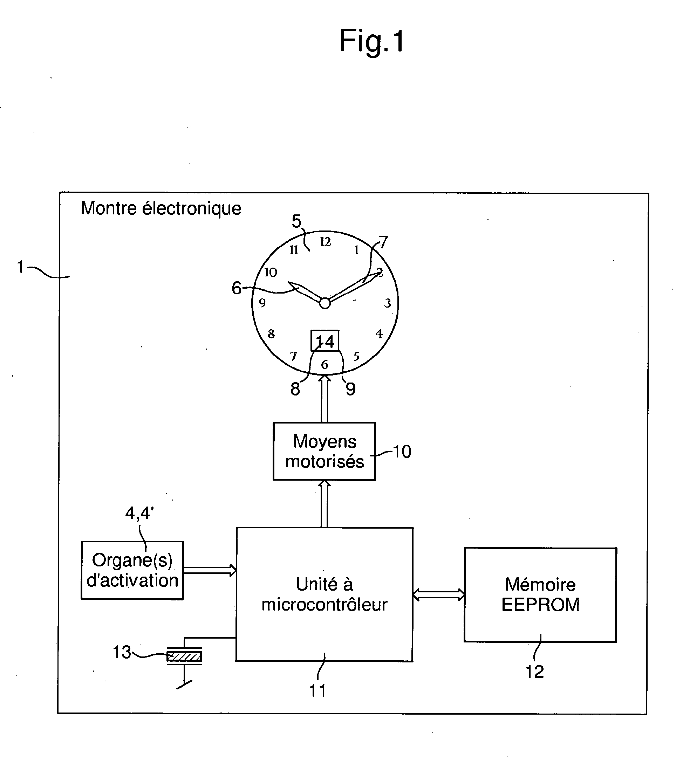

La figure 1 représente schématiquement différents éléments électroniques de la montre électronique 1, qui est dans cette forme d'exécution une montre électronique à affichage de l'heure par des aiguilles 6, 7. Cette montre électronique peut également comprendre au moins un disque de quantième 8, qui est par exemple monté rotatif autour d'un axe perpendiculaire à une platine du mouvement de montre, par exemple autour d'un axe central de ladite montre. Ce disque de quantième est disposé en dessous d'un cadran 5 de montre à indication horaire. Dans un mode de fonctionnement normal de ladite montre, chaque chiffre ou nombre du disque de quantième peut être successivement vu jour après jour à travers une fenêtre 9 de lecture du cadran 5 à indication horaire.

La montre électronique 1 comprend également un circuit de traitement et de commande 11, qui peut être de préférence une unité de traitement à microcontrôleur et un résonateur à quartz 13 d'un étage oscillateur du circuit de traitement et de commande pour définir une base de temps. L'unité à microcontrôleur peut comprendre par exemple un microcontrôleur du type CoolRISC à 8 bits faible puissance sous la dénomination EM6812 fabriqué par la société EM Microelectronic-Marin SA en Suisse.

La montre électronique 1 comprend encore des moyens motorisés 10, qui sont composés par exemple d'un ou plusieurs micromoteurs et de différents engrenages pour actionner les aiguilles et le disque de quantième. Ces moyens motorisés sont commandés par le circuit de traitement et de commande principalement pour entraîner les aiguilles 6 et 7 sur le cadran 5 de montre et la rotation du disque de quantième. Plus de deux aiguilles peuvent aussi être prévues dans le cas par exemple d'une montre chronographe.

Il peut aussi être prévu de monter deux disques de quantième 8 l'un au-dessus de l'autre ou l'un à côté de l'autre. Ces disques de quantième peuvent être montés rotatifs chacun autour d'un axe respectif ou commun perpendiculaire à la platine de montre. Ces disques de quantième peuvent être entraînés indépendamment l'un de l'autre ou en relation l'un avec l'autre par les moyens motorisés 10 pour l'indication des jours d'un mois.

La montre électronique 1 comprend encore un ou plusieurs organes d'activation 4, 4' reliés au circuit de traitement et de commande 11, et des moyens de mémorisation 12. Les organes d'activation sont prévus pour commander l'exécution de différentes opérations ou fonctions de la montre par l'intermédiaire du circuit de traitement et de commande 11, qui est programmé à cet effet. Les moyens de mémorisation peuvent mémoriser des données personnelles et/ou des données d'identification d'une marque de montre et/ou d'un numéro de série d'une montre particulière, ainsi que des paramètres de fonctionnement de la montre. Ces paramètres de fonctionnement de la montre permettent au circuit de traitement et de commande 11 de pouvoir commander le fonctionnement normal de ladite montre et également l'exécution d'un mode d'authentification de la montre expliqué ci-après. Une fois que le mode d'authentification est activé par au moins un organe d'activation 4, 4' en fonction, un dispositif de signalisation est prévu pour signaler visuellement à l'utilisateur de la montre une information d'authentification de la montre.

Les moyens de mémorisation peuvent être constitués en partie d'une mémoire non-volatile EEPROM 12 ou d'une mémoire Flash, dans laquelle sont mémorisés notamment un ou plusieurs codes d'identification de la marque et/ou du numéro de série de la montre. De manière connue, il peut être prévu une telle mémoire empêchant une reprogrammation une fois qu'un ou plusieurs codes d'identification ont été mémorisés après fabrication de la montre. Ceci permet de rendre difficile toute contrefaçon de ladite montre.

Si le circuit de traitement et de commande 11 est constitué d'une unité de traitement à microcontrôleur, les moyens de mémorisation 12 peuvent être en partie ou intégralement intégrés dans ladite unité de traitement à microcontrôleur. Cette unité à microcontrôleur peut également comprendre d'autres types de mémoire que la mémoire EEPROM ou Flash pour mémoriser des programmes de fonctionnement de ladite unité.

Les organes d'activation 4, 4' peuvent être constitués par exemple d'une couronne à tige traditionnelle, d'un bouton-poussoir, d'une ou plusieurs touches tactiles du type capacitif disposées sur le verre de montre ou sur une partie de la boîte de montre, et d'une lunette. Chaque organe d'activation peut être relié électriquement au circuit de traitement et de commande pour commander l'exécution notamment d'une opération ou d'une fonction spécifique. Plusieurs organes d'activation de différents types peuvent équiper ladite montre pour commander l'exécution d'une fonction particulière.

Dans le cas d'une couronne à tige 4 comme organe d'activation, cette couronne est susceptible d'occuper une première position de repos et une seconde position tirée vers l'extérieur de la boîte de montre. Dans la première position de repos, la tige de la couronne permet par exemple de fermer un contact électrique du circuit de traitement et de commande 11. Par contre dans une seconde position tirée vers l'extérieur de la boîte de montre, le contact électrique du circuit de traitement et de commande est ouvert. De ce fait, le circuit de traitement et de commande peut être activé pour passer dans un mode d'authentification par l'ouverture et la fermeture du contact électrique par l'intermédiaire de l'actionnement de la couronne à tige. En tirant la couronne vers sa seconde position extérieure et en la repoussant vers sa première position de repos dans un laps déterminé, par exemple entre 1 s et 4 s, ledit circuit de traitement et de commande passe dans un mode d'authentification.

Il est à noter qu'il peut aussi être envisagé d'avoir le contact électrique ouvert dans la première position de repos de la tige de la couronne. Ce contact électrique peut être fermé dans la seconde position tirée vers l'extérieur de la boîte de montre de la tige de la couronne selon le circuit électronique de traitement et de commande prévu à cet effet.

Il peut aussi être prévu comme organe d'activation, un capteur de choc disposé en relation au verre de montre, ou un capteur magnétique relié au circuit de traitement et de commande. Ledit capteur magnétique, qui est disposé à l'intérieur de la boîte de montre, est susceptible d'être activé au moyen d'un aimant permanent. Cet aimant permanent peut être placé sur un bracelet de ladite montre électronique. Un ardillon d'une boucle du bracelet peut être notamment un aimant de manière à activer le capteur magnétique, afin de commander au circuit de traitement et de commande le passage dans un mode d'authentification.

Il peut encore être prévu comme organe d'activation, une pile dans un logement de pile de la montre, qui est relié au circuit de traitement et de commande 11. La pile, reliée électriquement dans son logement de pile, permet de fournir une alimentation électrique aux composants électroniques de la montre. La pile peut être retirée du logement de pile et replacée aussitôt dans le logement de pile pour fournir un signal électrique d'initialisation au circuit de traitement et de commande. Par ce signal électrique d'initialisation, le circuit de traitement et de commande est commandé pour passer dans un mode d'authentification de la montre.

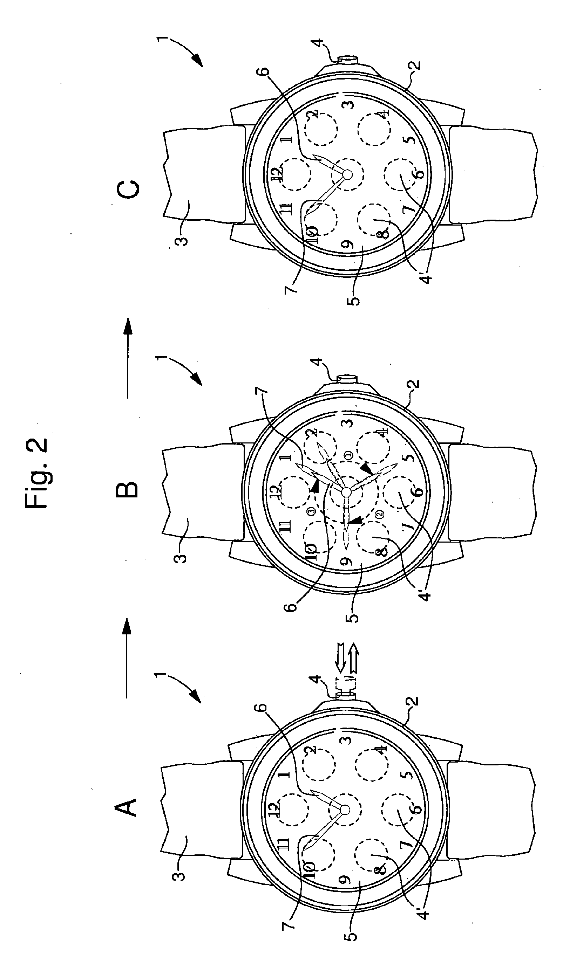

Pour mieux expliquer le procédé d'authentification de la montre électronique selon l'invention, la figure 2 représente différentes étapes dudit procédé d'authentification d'une montre électronique 1. Dans cette forme d'exécution, la montre électronique 1 est à affichage de l'heure par au moins deux aiguilles 6 et 7 sur un cadran 5 à indications chiffrées des heures. La montre électronique du type montre-bracelet, comprend un bracelet 3 fixé à une boîte de montre 2. La montre comprend comme organes d'activation, une couronne à tige 4 et plusieurs touches tactiles 4' du type capacitif disposées sur le verre de montre en étant suffisamment espacées l'une de l'autre. Pour la mise en fonction des touches tactiles, il peut être prévu encore un bouton-poussoir non représenté ou la couronne à tige. Cependant ces touches tactiles peuvent aussi être en permanence actives. Ces touches tactiles 4' peuvent être utilisées pour entrer dans un mode d'authentification ou pour entrer des données ou des paramètres, ou sélectionner différents menus ou fonctions de la montre. Pour entrer dans le mode d'authentification, il peut être envisagé d'effectuer tout d'abord un appui court sur au moins une touche tactile suivi d'un appui long, ou l'activation de plusieurs touches tactiles en même temps.

Dans la forme d'exécution représentée à la figure 2, il peut être utilisé de préférence la couronne à tige 4 pour passer d'un mode horaire à un mode d'authentification de la montre. Pour ce faire et comme montré sous la référence A de la figure 2, la couronne à tige 4 doit être tout d'abord tirée de sa première position de repos vers sa seconde position vers l'extérieur de la boîte de montre. Cela a pour conséquence qu'un contact électrique en relation avec le circuit de traitement et de commande est ouvert. La couronne à tige 4 doit ensuite est repoussée de sa seconde position vers sa première position de repos pour fermer à nouveau le contact électrique du circuit de traitement et de commande. Cette opération doit être effectuée dans un laps de temps déterminé par exemple entre 1 s et 4 s pour commander le passage du mode horaire, qui est représenté sous la référence A de la figure 2, à un mode d'authentification représenté sous la référence B de la figure 2.

Dans le mode d'authentification, au moins une aiguille 6 ou 7 forme une partie d'un dispositif de signalisation d'une information d'authentification de la montre au porteur de la montre. Cette information d'authentification peut être au moins une partie d'un code d'identification de la marque et/ou du numéro de série de la montre. De préférence, il peut être utilisé les deux aiguilles 6 et 7, ou trois aiguilles d'une montre chronographe pour indiquer des chiffres ou nombres d'au moins une partie d'un code d'identification à signaler visuellement au porteur de la montre. Cependant une aiguille d'indication peut suffire dans ce but, par exemple l'aiguille des minutes ou des secondes. Les deux ou trois aiguilles peuvent être disposées superposées pour être entraînées en commun par les moyens motorisés sur la base d'une commande fournie par le circuit de traitement et de commande.

Les aiguilles 6 et 7 superposées sont entraînées par les moyens motorisés, afin d'être déplacées successivement dans des positions d'indication horaire du cadran 5 pour signaler des chiffres ou nombres successifs d'un code d'identification à contrôler. Sous la référence B de la figure 2, les aiguilles 6 et 7 superposées sont déplacées pour indiquer successivement le chiffre 2, puis le chiffre 5, puis le chiffre 9 et enfin le chiffre 1 pour donner une partie du code d'identification souhaité 2591. Cette partie du code d'identification signalé par les aiguilles peut être comparée avec un code d'identification de la marque et/ou du numéro de série de la montre inscrit sur une carte fournie lors de la vente de la montre. Un code unique d'identification peut être prévu pour une marque de montre, alors qu'un code d'identification représentant un numéro de série est différent pour chaque montre fabriquée.

Bien entendu dans le cas où deux chiffres ou nombres successifs sont identiques, il peut être prévu que les aiguilles soient déplacées d'une certaine manière sur le cadran pour indiquer à l'utilisateur ces mêmes chiffres ou nombres successifs du code d'identification à contrôler. Dans ce cas, il peut être prévu que les moyens motorisés entraînent les aiguilles, pour qu'elles effectuent par exemple une rotation complète sur le cadran.

Le temps de passage d'une position d'indication horaire à une autre position d'indication horaire est programmé dans le circuit de traitement et de commande. Chaque temps de passage ou laps de temps est déterminé pour permettre à l'utilisateur de contrôler facilement chaque chiffre ou nombre indiqué sur le cadran par les aiguilles 6, 7. Une fois que les aiguilles ont indiqué tous les chiffres ou nombres suffisants pour authentifier ladite montre, ces aiguilles sont remises dans leur état d'affichage de l'heure par les moyens motorisés après une période définie de fonctionnement du mode d'authentification. Normalement après 4 s, il peut être prévu que les aiguilles sous la commande du circuit de traitement et de commande, soient entraînées par les moyens motorisés pour afficher à nouveau l'heure comme représenté sous la référence C de la figure 2. Tout retard temporel occasionné par la durée de fonctionnement du mode d'authentification est bien entendu corrigé de manière connue grâce à un compteur intégré dans l'unité à microcontrôleur.

A titre de variante pour l'authentification de la montre, il peut être prévu qu'au moins une aiguille 6 ou 7, ou les deux aiguilles 6, 7 superposées soient déplacées successivement après chaque activation de l'organe d'activation 4, 4' dans des positions d'indication horaire du cadran. Ceci permet après chaque activation de l'organe d'activation prévu à cet effet de signaler des chiffres ou nombres successifs d'un code d'identification de la marque et/ou du numéro de série de la montre à contrôler. Il peut aussi être prévu que les deux aiguilles 6, 7 sont déplacées alternativement par les moyens motorisés pour indiquer séparément les chiffres ou nombres successifs du code d'identification de la montre à contrôler.

En lieu et place de fournir une indication chiffrée d'un code d'identification, il peut aussi être prévu que dans un mode d'authentification, au moins une aiguille 6 ou 7 est déplacée en rotation sur le cadran pour effectuer un ou plusieurs mouvements de rotation dans une direction horaire ou anti-horaire. La ou les aiguilles peuvent aussi effectuer un ou plusieurs tours sur le cadran, afin de s'arrêter en une position déterminée de manière à fournir une information d'authentification de la montre.

Pour fournir une information d'authentification par l'intermédiaire du dispositif de signalisation, il peut aussi être utilisé un ou deux disques de quantième, qui sont entraînés par les moyens motorisés commandés par le circuit de traitement et de commande. Le ou les disques de quantième peuvent ainsi être déplacés pour signaler à travers une fenêtre du cadran, des chiffres ou nombres successifs d'un code d'identification de la marque et/ou du numéro de série de la montre à authentifier. Les disques de quantième peuvent être entraînés en rotation indépendamment l'un de l'autre. Comme précédemment mentionné, le ou les disques de quantième peuvent être déplacés successivement après chaque activation de l'organe d'activation 4, 4' prévu à cet effet. Ceci permet de signaler à l'utilisateur de la montre à travers la fenêtre du cadran, des chiffres ou nombres successifs d'un code d'identification de la marque et/ou du numéro de série de la montre à authentifier.

La montre électronique 1 peut comprendre encore un dispositif d'affichage du type LCD ou à LED ou OLED par exemple non représenté de manière à afficher différentes données. Le dispositif d'affichage de la montre peut encore être un affichage électroluminescent ou "e-paper" ou électrophorétique. Ce dispositif d'affichage peut également servir dans un mode d'authentification, comme dispositif de signalisation. Ce dispositif de signalisation permet d'afficher successivement ou de manière instantanée une partie d'un code d'identification de la marque et/ou du numéro de série de la montre à contrôler.

Plusieurs sources de lumière, formant par exemple un réseau de diodes électroluminescentes peuvent aussi être prévues comme dispositif de signalisation. Ces sources de lumière sont commandées par le circuit de traitement et de commande quand l'organe d'activation est activé pour le passage dans un mode d'authentification.

A partir de la description qui vient d'être faite, plusieurs variantes de réalisation du procédé d'authentification d'une montre électronique, ainsi que la montre électronique pour sa mise en oeuvre, peuvent être conçues par l'homme du métier sans sortir du cadre de l'invention définie par les revendications. La signalisation par un dispositif lumineux peut être facilement captée par un appareil, tel qu'un téléphone portable muni d'une application de vérification d'authentification par exemple d'une montre. Plusieurs types d'organe d'activation peuvent aussi être prévus pour activer la montre, afin qu'elle passe dans un mode d'authentification de la montre. Pour une montre chronographe, il peut être utilisé une aiguille des secondes, qui est située au centre et qui peut être entraînée indépendamment de l'entraînement des autres aiguilles de la montre.

## Revendications

1. Procédé d'authentification d'une montre électronique (1), ladite montre comprenant au moins un circuit de traitement et de commande (11) muni d'une base de temps, des aiguilles (6, 7) pour l'indication de l'heure, lesdites aiguilles étant entraînées par des moyens motorisés (10), qui sont commandés par le circuit de traitement et de commande (11), et des moyens de mémorisation (12) de données personnelles et/ou de données d'identification d'une marque et/ou d'un numéro de série et/ou de paramètres de fonctionnement de la montre, **caractérisé en ce que** le procédé comprend des étapes consistant à :
- activer au moins un organe d'activation (4, 4') de la montre, qui est lié au circuit de traitement et de commande pour passer dans un mode d'authentification de la montre, et
- commander un dispositif de signalisation de la montre, qui comprend les aiguilles (6, 7) suite à l'activation de l'organe d'activation, pour qu'au moins une des aiguilles soit entraînée par les moyens motorisés pour être déplacée au-dessus d'un cadran (5) à indication horaire pour signaler des chiffres ou nombres successifs d'un code d'identification de la marque et/ou du numéro de série de la montre pour fournir une information visuelle d'authentification de la montre.

2. Procédé d'authentification d'une montre électronique (1), ladite montre comprenant au moins un circuit de traitement et de commande (11) muni d'une base de temps, au moins un disque de quantième (8) entraîné par l'intermédiaire des moyens motorisés (10), qui sont commandés par le circuit de traitement et de commande (11), le disque étant disposé sous un cadran (5) de montre avec un chiffre ou un nombre affiché à travers une fenêtre (9) du cadran, et des moyens de mémorisation (12) de données personnelles et/ou de données d'identification d'une marque et/ou d'un numéro de série et/ou de paramètres de fonctionnement de la montre, **caractérisé en ce que** le procédé comprend des étapes consistant à :
- activer au moins un organe d'activation (4, 4') de la montre, qui est lié au circuit de traitement et de commande pour passer dans un mode d'authentification de la montre, et
- commander un dispositif de signalisation de la montre, qui comprend le disque de quantième (8) suite à l'activation de l'organe d'activation, pour que le disque de quantième soit déplacé pour signaler à travers la fenêtre du cadran, des chiffres ou nombres successifs d'un code d'identification de la marque et/ou du numéro de série de la montre pour fournir une information visuelle d'authentification de la montre.

3. Procédé d'authentification selon la revendication 1, **caractérisé en ce qu'**au moins une aiguille (6) est déplacée successivement dans des positions d'indication horaire du cadran pour signaler des chiffres ou nombres successifs d'un code d'identification de la marque et/ou du numéro de série de la montre à contrôler.

4. Procédé d'authentification selon la revendication 3, **caractérisé en ce que** le circuit de traitement et de commande (11) est programmé pour commander, dans un mode d'authentification, les moyens motorisés (10) pour déplacer au moins une aiguille (6) d'une position d'indication horaire à une position successive d'indication horaire après des laps de temps déterminés pour permettre à l'utilisateur de contrôler chaque chiffre ou nombre indiqué, et **en ce que** les aiguilles sont remises dans leur état d'affichage de l'heure par les moyens motorisés après une période définie de fonctionnement du mode d'authentification.

5. Procédé d'authentification selon la revendication 1, **caractérisé en ce que** dans un mode d'authentification, au moins une aiguille (6) est déplacée successivement après chaque activation de l'organe d'activation (4, 4') dans des positions d'indication horaire du cadran pour signaler des chiffres ou nombres successifs d'un code d'identification de la marque et/ou du numéro de série de la montre à contrôler.

6. Procédé d'authentification selon l'une des revendications 3 et 5, **caractérisé en ce qu'**au moins deux aiguilles (6, 7) sont déplacées alternativement par les moyens motorisés (10) pour indiquer séparément les chiffres ou nombres successifs du code d'identification de la montre à contrôler.

7. Procédé d'authentification selon la revendication 1, **caractérisé en ce qu'**au moins une aiguille (6) est déplacée sur le cadran (5) pour effectuer un ou plusieurs mouvements de rotation dans une direction horaire ou anti-horaire, ou pour effectuer un ou plusieurs tours sur le cadran, afin de s'arrêter en une position déterminée de manière à fournir une information d'authentification de la montre.

8. Procédé d'authentification selon la revendication 2, **caractérisé en ce que** dans un mode d'authentification, le disque de quantième est déplacé successivement après chaque activation de l'organe d'activation (4, 4') pour signaler à travers la fenêtre du cadran, des chiffres ou nombres successifs d'un code d'identification de la marque et/ou du numéro de série de la montre à authentifier.

9. Montre électronique (1) pour la mise en oeuvre du procédé d'authentification selon l'une des revendications précédentes, la montre comprenant au moins un circuit de traitement et de commande (11) muni d'une base de temps, des aiguilles (6, 7) pour l'indication de l'heure, lesdites aiguilles étant entraînées par des moyens motorisés (10), qui sont commandés par le circuit de traitement et de commande (11), et des moyens de mémorisation (12) de données personnelles et/ou de données d'identification d'une marque et/ou d'un numéro de série et/ou de paramètres de fonctionnement de la montre, **caractérisée en ce que** la montre comprend au moins un organe d'activation (4, 4') relié au circuit de traitement et de commande, ledit organe pouvant être activé pour commander, dans un mode d'authentification, un dispositif de signalisation de la montre, qui comprend les aiguilles (6, 7), pour qu'au moins une des aiguilles soit entraînée par les moyens motorisés pour être déplacée au-dessus d'un cadran (5) à indication horaire pour signaler des chiffres ou nombres successifs d'un code d'identification de la marque et/ou du numéro de série de la montre pour fournir une information visuelle d'authentification de la montre.

10. Montre électronique (1) pour la mise en oeuvre du procédé d'authentification selon l'une des revendications précédentes, la montre comprenant au moins un circuit de traitement et de commande (11) muni d'une base de temps, au moins un disque de quantième (8) entraîné par l'intermédiaire des moyens motorisés (10), qui sont commandés par le circuit de traitement et de commande (11), le disque étant disposé sous un cadran (5) de montre avec un chiffre ou un nombre affiché à travers une fenêtre (9) du cadran, et des moyens de mémorisation (12) de données personnelles et/ou de données d'identification d'une marque et/ou d'un numéro de série et/ou de paramètres de fonctionnement de la montre, **caractérisée en ce que** la montre comprend au moins un organe d'activation (4, 4') relié au circuit de traitement et de commande, ledit organe pouvant être activé pour commander, dans un mode d'authentification, un dispositif de signalisation de la montre, qui comprend le disque de quantième (8), pour que le disque de quantième soit déplacé pour signaler à travers la fenêtre du cadran, des chiffres ou nombres successifs d'un code d'identification de la marque et/ou du numéro de série de la montre pour fournir une information visuelle d'authentification de la montre.

11. Montre électronique (1) selon la revendication 9, **caractérisée en ce que** les moyens motorisés (10) sont commandés par le circuit de traitement et de commande (11) dans un mode d'authentification pour entraîner au moins une aiguille (6) dans des positions d'indication horaire du cadran pour signaler des chiffres ou nombres d'un code d'identification de la marque et/ou du numéro de série de la montre à authentifier.

12. Montre électronique (1) selon la revendication 11, **caractérisée en ce que** dans un mode d'authentification, au moins deux aiguilles (6, 7) sont agencées superposées pour être entraînées en commun par les moyens motorisés (10) de manière à indiquer des chiffres ou nombres d'un code d'identification de la montre à authentifier.

13. Montre électronique (1) selon la revendication 10, **caractérisée en ce que** la montre comprend deux disques de quantième, qui sont susceptibles d'être entraînés indépendamment l'un de l'autre par les moyens motorisés, afin de signaler à travers la fenêtre (9) du cadran, des chiffres ou nombres d'un code d'identification de la marque et/ou du numéro de série de la montre à authentifier.

14. Montre électronique (1) selon l'une des revendications 9 et 10, **caractérisée en ce que** l'organe d'activation est une couronne à tige (4) susceptible d'occuper une première position de repos dans laquelle un contact électrique du circuit de traitement et de commande (11) est fermé ou ouvert, et une seconde position tirée vers l'extérieur d'une boîte (2) de montre, dans laquelle le contact électrique du circuit de traitement et de commande est ouvert ou fermé inversement à la première position de repos, et **en ce que** le circuit de traitement et de commande peut être activé pour passer dans un mode d'authentification par l'ouverture et la fermeture du contact électrique par l'intermédiaire de l'actionnement de la couronne à tige.

15. Montre électronique (1) selon l'une des revendications 9 et 10, **caractérisée en ce que** l'organe d'activation est au moins une touche tactile (4') du type capacitif, qui est disposée sur un verre de montre ou sur une partie de la boîte de montre, et **en ce que** la touche tactile est agencée pour être en permanence active ou être mise en fonction, pour activer le mode d'authentification de la montre, au moyen d'un bouton-poussoir ou d'une couronne à tige de réglage de l'heure (4).

16. Montre électronique (1) selon l'une des revendications 9 et 10, **caractérisée en ce que** l'organe d'activation est constitué par une pile dans un logement de pile de la montre, qui est relié au circuit de traitement et de commande (11) pour fournir une alimentation électrique, la pile pouvant être retirée du logement de pile et replacée dans le logement de pile pour fournir un signal électrique d'initialisation au circuit de traitement et de commande pour passer dans un mode d'authentification de la montre.

17. Montre électronique (1) selon l'une des revendications 9 et 10, **caractérisée en ce que** l'organe d'activation est constitué par un capteur magnétique relié au circuit de traitement et de commande, ledit capteur magnétique étant susceptible d'être activé au moyen d'un aimant permanent disposé de préférence dans un bracelet (3) de la montre pour passer dans un mode d'authentification de la montre.

18. Montre électronique (1) selon l'une des revendications 9 et 10, **caractérisée en ce que** l'organe d'activation est un bouton-poussoir ou une lunette de montre ou un capteur de choc d'un verre de montre, qui sont reliés électriquement au circuit de traitement et de commande (11).

19. Montre électronique (1) selon l'une des revendications 9 et 10, **caractérisée en ce que** le dispositif de signalisation peut comprendre un générateur de sons ou un vibreur ou d'une ou plusieurs sources de lumière, qui sont commandés par le circuit de traitement et de commande (11).

## Patentansprüche

1. Verfahren zum Authentifizieren einer elektronischen Uhr (1), wobei die Uhr wenigstens eine Verarbeitungs- und Steuerschaltung (11), die mit einer Zeitbasis versehen ist, Zeiger (6, 7) zum Angeben der Uhrzeit, wobei die Zeiger durch Motormittel (10) angetrieben werden, die durch die Verarbeitungs- und Steuerschaltung (11) gesteuert werden, und Mittel (12) zum Speichern von persönlichen Daten und/oder Identifizierungsdaten einer Marke und/oder einer Seriennummer und/oder Betriebsparametern der Uhr umfasst, **dadurch gekennzeichnet, dass** das Verfahren die Schritte umfasst, die darin bestehen:
- wenigstens ein Aktivierungsorgan (4, 4') der Uhr zu aktivieren, das mit der Verarbeitungs- und Steuerschaltung verbunden ist, um in eine Betriebsart zum Authentifizieren der Uhr überzugehen, und
- eine Signalgebungsvorrichtung der Uhr, die die Zeiger (6, 7) umfasst, nach der Aktivierung des Aktivierungsorgans zu steuern, damit wenigstens einer der Zeiger durch die Motormittel angetrieben wird, um über einem Zifferblatt (5) mit Stundenangabe verlagert zu werden, um aufeinander folgende Ziffern oder Zahlen eines Identifizierungscodes der Marke und/oder der Seriennummer der Uhr anzuzeigen, um visuelle Informationen der Authentifizierung der Uhr zu liefern.

2. Authentifizierungsverfahren für eine elektronische Uhr (1), wobei die Uhr wenigstens eine Verarbeitungs- und Steuerschaltung (11), die mit einer Zeitbasis versehen ist, wenigstens eine Datumsscheibe (8), die über Motormittel (10) angetrieben wird, die durch die Verarbeitungs- und Steuerschaltung (11) gesteuert werden, wobei die Scheibe unter einem Zifferblatt (5) der Uhr so angeordnet ist, dass eine Ziffer oder eine Zahl durch ein Fenster (9) des Zifferblatts angezeigt wird, und Mittel (12) zum Speichern von persönlichen Daten und/oder Identifizierungsdaten einer Marke und/oder einer Seriennummer und/oder Betriebsparametern der Uhr umfasst, **dadurch gekennzeichnet, dass** das Verfahren die Schritte umfasst, die darin bestehen:
- wenigstens ein Aktivierungsorgan (4, 4') der Uhr, das mit der Verarbeitungs- und Steuerschaltung verbunden ist, zu aktivieren, um in eine Betriebsart zum Authentifizieren der Uhr überzugehen, und
- eine Signalgebungsvorrichtung der Uhr, die die Datumsscheibe (8) umfasst, nach der Aktivierung des Aktivierungsorgans zu steuern, damit die Datumsscheibe verlagert wird, um durch das Fenster des Zifferblatts aufeinander folgende Ziffern oder Zahlen eines Codes zum Identifizieren der Marke und/oder der Seriennummer der Uhr anzuzeigen, um visuelle Informationen der Authentifizierung der Uhr zu liefern.

3. Authentifizierungsverfahren nach Anspruch 1, **dadurch gekennzeichnet, dass** wenigstens ein Zeiger (6) nacheinander in Stundenangabepositionen des Zifferblatts verlagert wird, um aufeinander folgende Ziffern oder Zahlen eines Codes zum Identifizieren der Marke und/oder der Seriennummer der zu kontrollierenden Uhr anzuzeigen.

4. Authentifizierungsverfahren nach Anspruch 3, **dadurch gekennzeichnet, dass** die Verarbeitungs- und Steuerschaltung (11) programmiert ist, um in einer Authentifizierungsbetriebsart die Motormittel (10) zu steuern, damit sie wenigstens einen Zeiger (6) aus einer Stundenangabeposition in eine nachfolgende Stundenangabeposition nach dem Verstreichen eines bestimmten Zeitintervalls verlagert, um dem Anwender zu ermöglichen, jede angegebene Ziffer oder Zahl zu kontrollieren, und dass die Zeiger in ihrem Zustand zum Anzeigen der Uhrzeit durch die Motormittel zurückgestellt werden, nachdem eine definierte Zeitperiode in der Funktionsweise der Authentifizierungsbetriebsart verstrichen ist.

5. Authentifizierungsverfahren nach Anspruch 1, **dadurch gekennzeichnet, dass** in einer Authentifizierungsbetriebsart wenigstens ein Zeiger (6) nacheinander nach jeder Aktivierung des Aktivierungsorgans (4, 4') in Stundenangabepositionen des Zifferblatts verlagert wird, um aufeinander folgende Ziffern oder Zahlen eines Identifizierungscodes der Marke und/oder der Seriennummer der zu kontrollierenden Uhr anzuzeigen.

6. Authentifizierungsverfahren nach einem der Ansprüche 3 und 5, **dadurch gekennzeichnet, dass** wenigstens zwei Zeiger (6, 7) durch die Motormittel (10) abwechselnd verlagert werden, um getrennt die aufeinander folgenden Ziffern oder Zahlen des Identifizierungscodes der zu kontrollierenden Uhr anzugeben.

7. Authentifizierungsverfahren nach Anspruch 1, **dadurch gekennzeichnet, dass** wenigstens ein Zeiger (6) auf dem Zifferblatt (5) verlagert wird, um eine oder mehrere Drehbewegungen im Uhrzeigersinn oder im Gegenuhrzeigersinn auszuführen und um eine oder mehrere Umdrehungen auf dem Zifferblatt auszuführen, um in einer bestimmten Position anzuhalten, derart, dass eine Authentifizierungsinformation der Uhr geliefert wird.

8. Authentifizierungsverfahren nach Anspruch 2, **dadurch gekennzeichnet, dass** die Datumsscheibe in einer Authentifizierungsbetriebsart nacheinander nach jeder Aktivierung des Aktivierungsorgans (4, 4') verlagert wird, um durch das Fenster des Zifferblatts aufeinander folgende Ziffern oder Zahlen eines Identifizierungscodes der Marke und/oder der Seriennummer der zu authentifizierenden Uhr anzuzeigen.

9. Elektronische Uhr (1) für die Ausführung des Authentifizierungsverfahrens nach einem der vorhergehenden Ansprüche, wobei die Uhr wenigstens eine Verarbeitungs- und Steuerschaltung (11), die mit einer Zeitbasis versehen ist, Zeiger (6, 7) zum Angeben der Uhrzeit, wobei die Zeiger durch Motormittel (10) angetrieben werden, die durch die Verarbeitungs- und Steuerschaltung (11) gesteuert werden, und Mittel (12) zum Speichern von persönlichen Daten und/oder Identifizierungsdaten einer Marke und/oder einer Seriennummer und/oder Betriebsparametern der Uhr umfasst, **dadurch gekennzeichnet, dass** die Uhr wenigstens ein Aktivierungsorgan (4, 4') umfasst, das mit der Verarbeitungs- und Steuerschaltung verbunden ist, wobei das Organ aktiviert werden kann, um in einer Authentifizierungsbetriebsart eine Signalgebungsvorrichtung der Uhr zu steuern, die die Zeiger (6, 7) umfasst, damit wenigstens einer der Zeiger durch die Motormittel angetrieben wird, um über einem Zifferblatt (5) mit Stundenangabe verlagert zu werden, um aufeinander folgende Ziffern oder Zahlen eines Identifizierungscodes der Marke und/oder der Seriennummer der Uhr anzuzeigen, um visuelle Informationen der Authentifizierung der Uhr zu liefern.

10. Elektronische Uhr (1) zum Ausführen des Authentifizierungsverfahrens nach einem der vorhergehenden Ansprüche, wobei die Uhr wenigstens eine Verarbeitungs- und Steuerschaltung (11), die mit einer Zeitbasis versehen ist, wenigstens eine Datumsscheibe (8), die über Motormittel (10) angetrieben wird, die durch die Verarbeitungs- und Steuerschaltung (11) gesteuert werden, wobei die Scheibe unter einem Zifferblatt (5) der Uhr so angeordnet ist, dass eine Ziffer oder eine Zahl durch ein Fenster (9) des Zifferblatts angezeigt wird, und Mittel (12) zum Speichern von persönlichen Daten und/oder Identifizierungsdaten einer Marke und/oder einer Seriennummer und/oder Betriebsparametern der Uhr umfasst, **dadurch gekennzeichnet, dass** die Uhr wenigstens ein Aktivierungsorgan (4, 4') umfasst, das mit der Verarbeitungs- und Steuerschaltung verbunden ist, wobei das Organ aktiviert werden kann, um einer Authentifizierungsbetriebsart eine Signalgebungsvorrichtung der Uhr, die die Datumsscheibe (8) umfasst, zu steuern, damit die Datumsscheibe verlagert wird, um durch das Fenster des Zifferblatts aufeinander folgende Ziffern oder Zahlen eines Identifizierungscodes der Marke und/oder der Seriennummer der Uhr anzuzeigen, um visuelle Informationen der Authentifizierung der Uhr zu liefern.

11. Elektronische Uhr (1) nach Anspruch 9, **dadurch gekennzeichnet, dass** die Motormittel (10) durch die Verarbeitungs- und Steuerschaltung (11) in einer Authentifizierungsbetriebsart gesteuert werden, um wenigstens einen Zeiger (6) in Stundenangabepositionen des Zifferblatts anzutreiben, um Ziffern oder Zahlen eines Identifizierungscodes der Marke und/oder der Seriennummer der zu authentifizierenden Uhr anzuzeigen.

12. Elektronische Uhr (1) nach Anspruch 11, **dadurch gekennzeichnet, dass** in einer Authentifizierungsbetriebsart wenigstens zwei Zeiger (6, 7) dafür ausgelegt sind, einander überlagert zu werden, um gemeinsam durch die Motormittel (10) angetrieben zu werden, derart, dass Ziffern oder Zahlen eines Identifizierungscodes der zu authentifizierenden Uhr angezeigt werden.

13. Elektronische Uhr (1) nach Anspruch 10, **dadurch gekennzeichnet, dass** die Uhr zwei Datumsscheiben umfasst, die unabhängig voneinander durch die Motormittel angetrieben werden können, um durch das Fenster (9) des Zifferblatts Ziffern oder Zahlen eines Identifizierungscodes der Marke und/oder der Seriennummer der zu authentifizierenden Uhr anzuzeigen.

14. Elektronische Uhr (1) nach einem der Ansprüche 9 und 10, **dadurch gekennzeichnet, dass** das Aktivierungsorgan eine Stiftkrone (4) ist, die eine erste Ruheposition, in der ein elektrischer Kontakt der Verarbeitungs- und Steuerschaltung (11) geschlossen oder offen ist, und eine zweite Position, in der sie aus einem Gehäuse (2) der Uhr nach außen gezogen ist und in der der elektrische Kontakt der Verarbeitungs- und Steuerschaltung umgekehrt wie in der ersten Ruheposition offen bzw. geschlossen ist, einnehmen kann, und dass die Verarbeitungs- und Steuerschaltung durch Öffnen und Schließen des elektrischen Kontakts über die Betätigung der Stiftkrone aktiviert werden kann, um in eine Authentifizierungsbetriebsart überzugehen.

15. Elektronische Uhr (1) nach einem der Ansprüche 9 und 10, **dadurch gekennzeichnet, dass** das Aktivierungsorgan wenigstens eine berührungsempfindliche Taste (4') des kapazitiven Typs ist, die auf einem Glas der Uhr oder auf einem Teil des Gehäuses der Uhr angeordnet ist, und dass die berührungsempfindliche Taste dafür ausgelegt ist, ständig aktiv oder in Betrieb versetzt zu sein, um die Authentifizierungsbetriebsart der Uhr mittels einer Drucktaste oder einer Stiftkrone zum Einstellen der Uhrzeit (4) zu aktivieren.

16. Elektronische Uhr (1) nach einem der Ansprüche 9 und 10, **dadurch gekennzeichnet, dass** das Aktivierungsorgan durch eine Batteriezelle in einem Batteriezellenaufnahmeraum der Uhr gebildet ist, die mit der Verarbeitungs- und Steuerschaltung (11) verbunden ist, um eine elektrische Versorgung bereitzustellen, wobei die Batteriezelle aus dem Batteriezellenaufnahmesitz entnommen und wieder in den Batteriezellenaufnahmesitz eingesetzt werden kann, um ein elektrisches Signal zum Initialisieren der Verarbeitungs- und Steuerschaltung zu liefern, damit sie in eine Authentifizierungsbetriebsart der Uhr übergeht.

17. Elektronische Uhr (1) nach einem der Ansprüche 9 und 10, **dadurch gekennzeichnet, dass** das Aktivierungsorgan durch einen magnetischen Sensor gebildet ist, der mit der Verarbeitungs- und Steuerschaltung verbunden ist, wobei der magnetische Sensor mittels eines Permanentmagneten, der vorzugsweise in einem Armband (3) der Uhr angeordnet ist, aktiviert werden kann, um in eine Authentifizierungsbetriebsart der Uhr überzugehen.

18. Elektronische Uhr (1) nach einem der Ansprüche 9 und 10, **dadurch gekennzeichnet, dass** das Aktivierungsorgan eine Drucktaste oder ein Glasreif der Uhr oder ein Sensor für einen Stoß auf ein Uhrenglas der Uhr, die mit der Verarbeitungs- und Steuerschaltung (11) elektrisch verbunden sind, ist.

19. Elektronische Uhr (1) nach einem der Ansprüche 9 und 10, **dadurch gekennzeichnet, dass** die Signalgebungsvorrichtung einen Tongenerator oder eine Vibrationseinrichtung oder eine oder mehrere Lichtquellen, die durch die Verarbeitungs- und Steuerschaltung (11) gesteuert werden, umfassen kann.

## Claims

1. Method for authenticating an electronic watch (1), said watch including at least one processing and control circuit (11) provided with a time base, hands (6, 7) for indicating the time, said hands being driven by a motorized means (10) which is controlled by the processing and control circuit (11), and a means (12) of storing personal data and/or identification data of a brand and/or serial number and/or operating parameters of the watch, **characterized in that** the method includes the steps consisting in:
- enabling at least one activation member (4, 4') of the watch, which is connected to the processing and control circuit, to change into watch authentication mode, and
- operating an indicator device of the watch, which includes said hands (6, 7), after enabling the activation member so that at least one of the hands is driven by the motorized means to be moved above a time-indicating dial (5) to indicate successive digits or numbers of an identification code of the brand and/or serial number of the watch to provide a visual watch authentication information.

2. Method for authenticating an electronic watch (1), said watch including at least one processing and control circuit (11) provided with a time base, at least one date disc (8) driven via a motorized means (10), which is controlled by the processing and control circuit (11), the disc being arranged underneath a watch dial (5) with a digit or number displayed through an aperture (9) in the dial, and a means (12) of storing personal data and/or identification data of a brand and/or serial number and/or operating parameters of the watch, **characterized in that** the method includes the steps consisting in:
- enabling at least one activation member (4, 4') of the watch, which is connected to the processing and control circuit, to change into watch authentication mode, and
- operating an indicator device of the watch, which includes the date disc (8), after enabling the activation member so that the date disc is moved in succession after each activation of the activation member (4, 4') to indicate successive digits or numbers of an identification code of the brand and/or serial number of the watch to provide a visual watch authentication information.

3. Authentication method according to claim 1, **characterized in that** at least one hand (6) is moved in succession into time indicating positions on the dial to indicate successive digits or numbers of an identification code of the brand and/or serial number of the watch to be checked.

4. Authentication method according to claim 3, **characterized in that**, in authentication mode, the processing and control circuit (11) is programmed to operate the motorized means (10) to move at least one hand (6) from a time indicating position to a successive time indicating position after determined time periods to allow the user to check each digit or number indicated, and **in that** the hands are reset to their time display state by the motorized means after a defined authentication mode operating period.

5. Authentication method according to claim 1, **characterized in that**, in authentication mode, at least one hand (6) is moved in succession after each activation of the activation member (4, 4') into time indicating positions on the dial to indicate successive digits or numbers of an identification code of the brand and/or serial number of the watch to be checked.

6. Authentication method according to any of claims 3 and 5, **characterized in that** at least two hands (6, 7) are moved alternately by the motorized means (10) to indicate separately the successive digits or numbers of the identification code of the watch to be checked.

7. Authentication method according to claim 1, **characterized in that** at least one hand (6) is moved on the dial (5) to perform one or several rotational movements in a clockwise or anticlockwise direction, or to complete one or several revolutions on the dial, so as to stop in a determined position to provide watch authentication information.

8. Authentication method according to claim 2, **characterized in that**, in authentication mode, the date disc is moved in succession after each activation of the activation member (4, 4') to indicate successive digits or numbers of an identification code of the brand and/or serial number of the watch to be authenticated through the aperture in the dial.

9. Electronic watch (1) for implementing the authentication method according to any of the preceding claims, wherein the watch includes at least one processing and control circuit (11) provided with a time base, hands (6, 7) for indicating the time, said hands being driven by a motorized means (10) which is controlled by the processing and control circuit (11) and a means (12) of storing personal data and/or identification data of a brand and/or serial number and/or operating parameters of the watch, **characterized in that** the watch includes at least one activation member (4, 4') connected to the processing and control circuit, and said member being able to enabled to operate, in authentication mode, an indicator device of the watch, which includes said hands (6, 7) so that at least one of the hands is driven by the motorized means to be moved above a time-indicating dial (5) to indicate successive digits or numbers of an identification code of the brand and/or serial number of the watch to provide a visual watch authentication information.

10. Electronic watch (1) for implementing the authentication method according to any of the preceding claims, wherein the watch includes at least one processing and control circuit (11) provided with a time base, at least one date disc (8) driven via a motorized means (10), which is controlled by the processing and control circuit (11), the disc being arranged underneath a watch dial (5) with a digit or number displayed through an aperture (9) in the dial, and a means (12) of storing personal data and/or identification data of a brand and/or serial number and/or operating parameters of the watch, **characterized in that** the watch includes at least one activation member (4, 4') connected to the processing and control circuit, and said member being able to be enabled to operate, in authentication mode, an indicator device of the watch, which includes the date disc (8) so that the date disc is moved to indicate successive digits or numbers of an identification code of the brand and/or serial number of the watch through the aperture in the dial to provide visual watch authentication information.

11. Electronic watch (1) according to claim 9, **characterized in that** the motorized means (10) is operated by the processing and control circuit (11) in authentication mode to drive at least one hand (6) into time indicating positions on the dial to indicate the digits or numbers of an identification code of the brand and/or serial number of the watch to be authenticated.

12. Electronic watch (1) according to claim 11, **characterized in that**, in authentication mode, at least two hands (6, 7) are superposed to be driven together by the motorized means (10) so as to indicate digits or numbers of an identification code of the watch to be authenticated.

13. Electronic watch (1) according to claim 10, **characterized in that** the watch includes two date discs, which are capable of being driven independently of each other by the motorized means, so as to indicate digits or numbers of an identification code of the brand and/or serial number of the watch to be authenticated through the aperture (9) in the dial.

14. Electronic watch (1) according to any of claims 9 and 10, **characterized in that** the activation member is a stem/crown (4) capable of occupying a first rest position in which an electric contact of the processing and control circuit (11) is closed or open, and a second position pulled out towards the outside of a watch case (2), in which the electric contact of the processing and control circuit is open or closed inversely to the first rest position, and **in that** the processing and control circuit can be activated to change into authentication mode by opening and closing the electric contact by activating the stem/crown.

15. Electronic watch (1) according to any of claims 9 and 10, **characterized in that** the activation member is at least one capacitive touch key (4'), which is arranged on a watch glass or on a part of the watch case, and **in that** the touch key is arranged to be permanently active or to be enabled, to activate the watch authentication mode, by means of a push-button or a time-setting stem/crown (4).

16. Electronic watch (1) according to any of claims 9 and 10, **characterized in that** the activation member is formed by a battery in a battery housing of the watch, which is connected to the processing and control circuit (11) to supply electric power, wherein the battery can be removed from the battery housing and replaced in the battery housing to supply an electric initialisation signal to the processing and control circuit for the change into watch authentication mode.

17. Electronic watch (1) according to any of claims 9 and 10, **characterized in that** the activation member is formed by a magnetic sensor connected to the processing and control circuit, wherein said magnetic sensor is capable of being enabled by means of a permanent magnet preferably arranged in a bracelet or strap (3) of the watch to change into watch authentication mode.

18. Electronic watch (1) according to any of claims 9 and 10, **characterized in that** the activation member is a push-button or a watch bezel or a shock sensor of a watch glass, which are electrically connected to the processing and control circuit (11).

19. Electronic watch (1) according to any of claims 9 and 10, **characterized in that** the indicator device is formed of a sound generator or vibrating element or one or more light sources, which are controlled by the processing and control circuit (11).
